Europäisches Patentamt

European Patent Office

Office européen des brevets

(11) Numéro de publication : **0 162 768**
**B1**

# (12) FASCICULE DE BREVET EUROPÉEN

(45) Date de publication du fascicule du brevet :
29.07.87

(51) Int. Cl.⁴ : **B 60 P   3/42**

(21) Numéro de dépôt : **85400851.3**

(22) Date de dépôt : **30.04.85**

(54) **Véhicule automobile utilitaire.**

(30) Priorité : **04.05.84 FR 8406993**

(43) Date de publication de la demande :
**27.11.85 Bulletin 85/48**

(45) Mention de la délivrance du brevet :
**29.07.87 Bulletin 87/31**

(84) Etats contractants désignés :
**DE GB IT**

(56) Documents cités :
**FR-A- 2 067 197**
**GB-A- 2 006 130**

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Froumajou, Armand**
**11bis, rue du Docteur Laennec**
**F-95520 Osny (FR)**
Inventeur : **Rabeux, Claude**
**48 rue Jean Jaurès**
**F-95320 St Leu la Forêt (FR)**

(74) Mandataire : **Moncheny, Michel et al**
**c/o Cabinet Lavoix 2 Place d'Estienne d'Orves**
**F-75441 Paris Cedex 09 (FR)**

## Description

L'invention se rapporte à un véhicule utilitaire dérivé d'une berline de série.

Il est intéressant, pour des raisons de standardisation, de réaliser des véhicules utilitaires constitués à partir de l'avant d'une berline.

Dans le cas d'une berline à caisse autoporteuse, il n'est pas possible d'utiliser un châssis longitudinal reliant les trains avant et arrière, sans faire subir des transformations importantes à la partie avant de la berline, ce qui enlève tout intérêt à l'opération.

Pour pouvoir utiliser, avec le minimum de transformations, cette partie avant, on est alors amené à la prolonger, vers l'arrière, par une structure relativement encombrante en hauteur, afin d'assurer une bonne rigidité de l'ensemble. En effet, dans les adaptations connues, la liaison entre la partie arrière et la partie avant de la berline se fait au droit de la cloison fermant, vers l'arrière, cette partie avant. Pour avoir une bonne rigidité de l'ensemble, on comprend que cette liaison doit se faire sur une hauteur relativement grande, ce qui limite le nombre d'adaptations possibles pour le véhicule ainsi créé.

On connaît également par le FR-A-2 067 197 un véhicule dont la partie avant est constituée par un véhicule complet comprenant un châssis et deux essieux. Ce véhicule est conçu, dès l'origine, en vue d'être associé à une partie arrière pour former un ensemble à trois essieux, avec tous les inconvénients qui en résultent.

Par conséquent, la solution au problème exposé ci-dessus n'est pas suggérée par ce document antérieur.

L'invention a donc pour but de réaliser un véhicule qui utilise avec le moins de transformations possibles la partie avant d'une berline à caisse autoporteuse, tout en offrant le maximum d'adaptations possibles et en assurant une parfaite rigidité.

Le véhicule utilitaire visé par l'invention comporte une structure arrière et une partie avant formée par la partie avant d'une berline à caisse autoporteuse comprenant un plancher et deux longerons latéraux de bas de caisse.

Suivant l'invention, ce véhicule est caractérisé en ce que, la structure arrière étant constituée par un châssis formé de deux longerons reliés par des traverses, ces longerons sont encastrés et fixés dans des logements délimités par des parties latérales relevées du plancher, et les longerons de la caisse, et ils s'arrêtent avant les passages des roues avant.

Un exemple non limitatif de réalisation de l'invention sera décrit ci-après, en référence aux dessins joints dans lesquels :

la Figure 1 est une vue en perspective de l'ensemble du véhicule utilitaire conforme à l'invention ;

la Figure 2 est une vue en perspective, du véhicule avant assemblage, les roues n'étant pas représentées ;

les Figures 3 à 6 sont des sections transversales selon les lignes III-III à VI-VI de la Fig. 1.

Le véhicule utilitaire selon l'invention est principalement constitué par une partie avant 1 d'une berline à caisse autoporteuse et par une structure arrière constituée d'un châssis 2.

La partie avant 1 est pratiquement identique à la partie correspondante de la berline dont elle dérive, à l'exception du plancher 3, ainsi qu'il apparaîtra ci-dessous. En particulier, elle comprend tous les éléments, non représentés, de liaison avec le train avant et la partie mécanique. Elle est fermée, vers l'arrière, par une cloison 4.

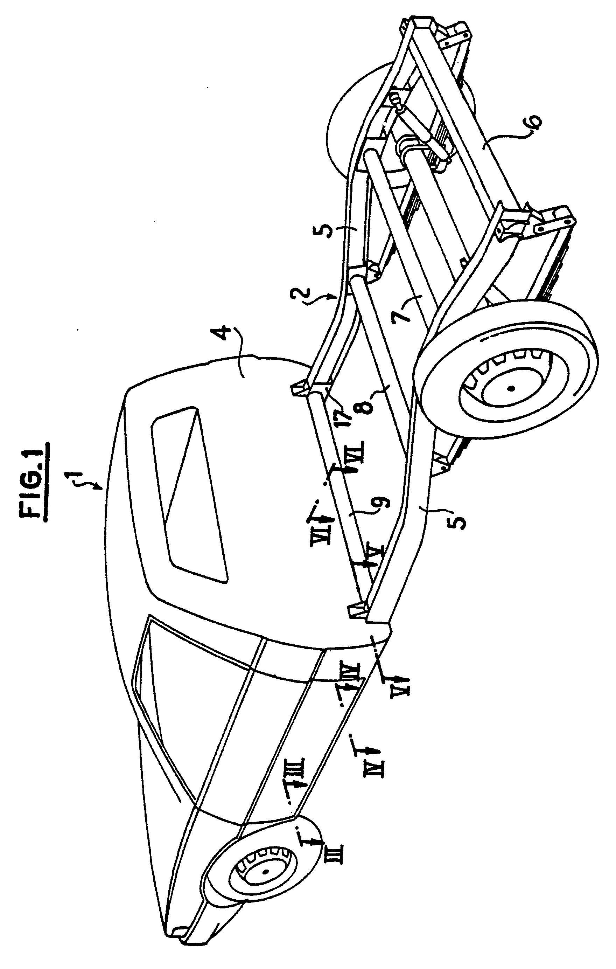

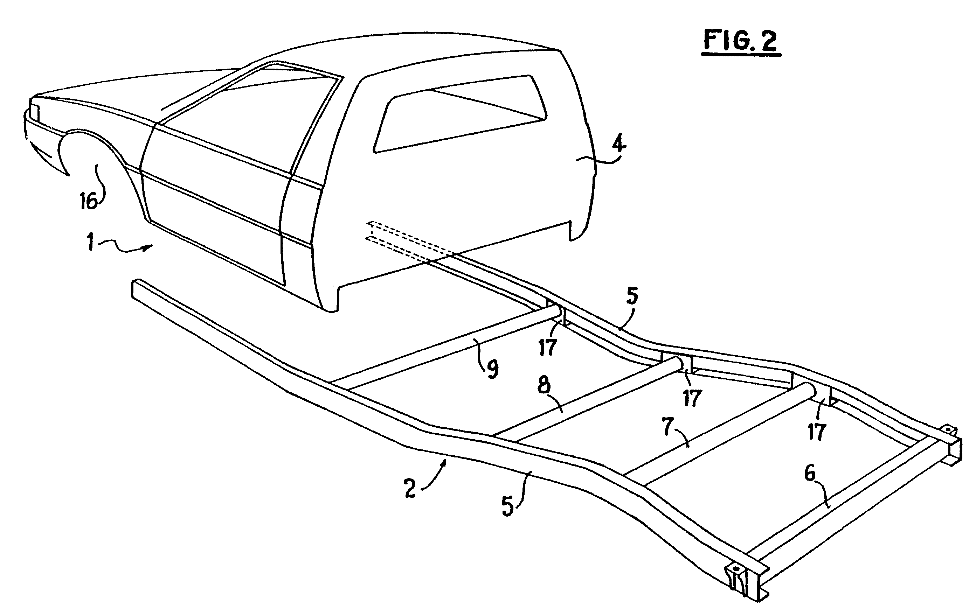

Le châssis 2 est constitué par deux longerons 5 reliés par des traverses 6, 7, 8, 9, dont les extrémités sont munies de cornières 17 de fixation aux ailes horizontales des longerons 5 (Fig. 1, 2, 5).

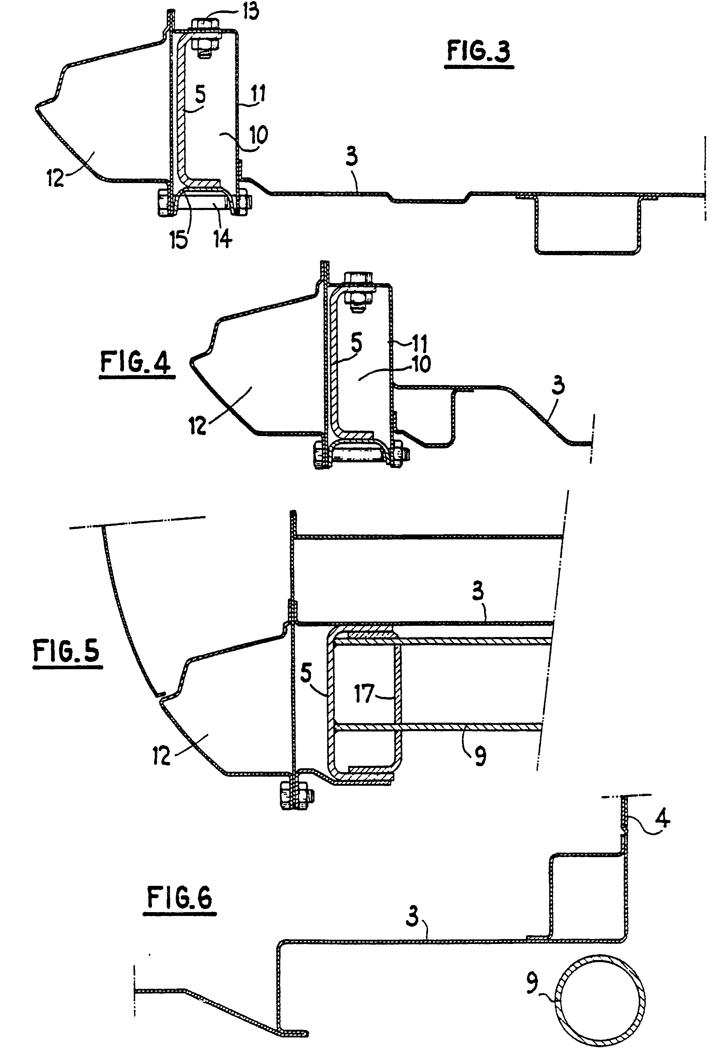

Chaque longeron 5 du châssis 2 s'engage dans un logement 10 formé entre une partie latérale relevée 11 du plancher 3 et un longeron 12 qui forme la partie inférieure de la caisse 1 (Fig. 4, 5).

La fixation entre les longerons 5 du châssis et la caisse 1 peut être réalisée, par exemple, par des boulons supérieurs 13 et des boulons inférieurs 14, ces derniers traversant des pattes 15 solidaires des longerons 5.

Les longerons 5 du châssis se terminent avant les passages 16 de roues avant.

Grâce à la disposition décrite, on obtient un ensemble parfaitement rigide qui laisse toute possibilité d'aménagement de la partie arrière avec une simple adaptation du plancher de la partie avant de la caisse de la berline.

## Revendications

1. Véhicule utilitaire comportant une structure arrière (2) et une partie avant (1) formée par la partie avant d'une berline à caisse autoporteuse comprenant un plancher (3) et deux longerons latéraux (12) de bas de caisse, caractérisé en ce que, la structure arrière (2) étant constituée par un châssis formé de deux longerons (5) reliés par des traverses (6, 7, 8, 9), ces longerons (5) sont encastrés et fixés dans des logements (10) délimités par des parties latérales relevées (11) du plancher (3) et les longerons (12) de la caisse, et ils s'arrêtent avant les passages (16) des roues avant.

2. Véhicule selon la revendication 1, caractérisé en ce que les moyens de fixation des longerons (5) dans leurs logements (10) comprennent des boulons (14) traversant des pattes (15) solidaires desdits longerons (5).

## Claims

1. A utility vehicle comprising a rear structure (2) and a front part (1) formed by the front part of a limousine having a self-supporting monopiece body comprising a floor (3) and two side-members (12) of the base of the body, characterised in that as the rear structure (2) is constituted by a chassis formed by two side-members (5) interconnected by cross-members (6, 7, 8, 9), these side-members (5) are inserted and fixed in cavities (10) defined by raised lateral parts (11) of the floor (3) and the side-members (12) of the body, and they terminate short of the passages (16) of the front wheels.

2. A vehicle according to claim 1, characterised in that the means for fixing the side-members (5) in their cavities (10) comprise bolts (14) extending through lugs (15) integral with said side-members (5).

**Patentansprüche**

1. Nutzfahrzeug mit einer hinteren Struktur (2) und einem Vorbau (1), der durch den vorderen Teil einer Limousine mit selbsttragender Karosserie gebildet ist, welcher einen Boden (3) und zwei seitliche Karosserieunterteil-Längsschweller (12) umfaßt, dadurch gekennzeichnet, daß, wobei die hintere Struktur (2) durch einen Rahmen gebildet ist, welcher aus zwei durch Querträger (6, 7, 8, 9) verbundenen Längsträgern (5) aufgebaut ist, diese Längsträger in Aufnahmen (10) eingelassen und befestigt sind, welche durch seitliche hochgerichtete Teile (11) des Bodens (3) und die Karosserielängsschweller (12) begrenzt sind, und daß sie vor den vorderen Radkästen (16) aufhören.

2. Fahrzeug nach Anspruch 1, dadurch gekennzeichnet, daß die Mittel zur Befestigung der Längsträger (5) in ihren Aufnahmen (10) Durchsteckschrauben (14) umfassen, welche mit diesen Längsträgern (5) fest verbundene Lappen (15) durchsetzen.

# FIG.1

0 162 768

FIG. 2

0 162 768

0 162 768

**FIG.3**

**FIG.4**

**FIG.5**

**FIG.6**

3